# FASCICULE DE BREVET EUROPEEN

(11) **EP 1 561 021 B1**
(45) Date de publication et mention de la délivrance du brevet: **23.04.2008**
(21) Numéro de dépôt: 03780206.3
(22) Date de dépôt: 30.09.2003
(51) Int. Cl.: F02B 29/04, F02M 25/07, F02M 31/04, F02M 31/10

(54) **DISPOSITIF DE REGULATION THERMIQUE DE L'AIR D'ADMISSION D'UN MOTEUR ET DE GAZ D' ECHAPPEMENT RECIRCULES EMIS PAR CE MOTEUR.**
VORRICHTUNG ZUR WÄRMEREGELUNG DER EINLASSLUFT FÜR EINEN MOTOR UND DURCH DEN MOTOR ABGEGEBENES RÜCKGEFÜHRTES ABGAS
DEVICE FOR THE THERMAL REGULATION OF THE INTAKE AIR FOR AN ENGINE AND THE RECIRCULATED EXHAUST GAS EMITTED BY SAID ENGINE.

(30) Priorité: 12.11.2002 FR 0214120
(43) Date de publication de la demande: 10.08.2005
(73) Titulaire: Peugeot Citroen Automobiles SA, 92200 Neuilly sur Seine (FR)
(72) Inventeur: TOMASELLI, Ludovic, F-92400 Courbevoie (FR); MONIE, Nicolas, F-92250 La Garenne Colombes (FR)
(74) Mandataire: Berger, Helmut
(86) Numéro de dépôt international: PCT/FR2003/002866
(87) Numéro de publication internationale: WO 2004/044402

(56) Documents cités:
- EP-A- 1 170 498
- DE-A- 19 735 306
- DE-A- 19 930 416
- US-A- 4 207 848
- PATENT ABSTRACTS OF JAPAN vol. 1997, no. 01, 31 janvier 1997 (1997-01-31) -& JP 08 232784 A (NISSAN MOTOR CO LTD), 10 septembre 1996 (1996-09-10)
- PATENT ABSTRACTS OF JAPAN vol. 2003, no. 02, 5 février 2003 (2003-02-05) -& JP 2002 310007 A (MITSUBISHI MOTORS CORP), 23 octobre 2002 (2002-10-23)
- PATENT ABSTRACTS OF JAPAN vol. 1998, no. 02, 30 janvier 1998 (1998-01-30) -& JP 09 280118 A (ISUZU MOTORS LTD), 28 octobre 1997 (1997-10-28)

## Description

La présente invention concerne un dispositif de régulation thermique de l'air d'admission d'un moteur et de gaz d'échappement recirculés émis par ce moteur.

Elle s'applique en particulier à la régulation thermique d'un mélange d'admission d'un moteur à combustion interne suralimenté raccordé à une ligne d'échappement munie d'un filtre à particules.

On souhaite refroidir l'air d'admission d'un moteur notamment lorsque ce dernier est suralimenté au moyen d'un ensemble turbo-compresseur muni, d'une part, d'une turbine entraînée par des gaz d'échappement du moteur, agencée en aval du moteur, et d'autre part, d'un compresseur d'air d'admission agencé en amont du moteur. En effet, l'air d'admission du moteur, se réchauffant dans le compresseur, doit être refroidi à la sortie de ce compresseur afin d'optimiser les performances du moteur et minimiser les émissions de polluants. En effet, l'abaissement de la température de l'air d'admission accroît la densité de cet air. L'augmentation de cette densité accroît la quantité d'air admise dans les cylindres et la puissance du moteur.

On souhaite réchauffer l'air d'admission d'un moteur notamment lorsque ce dernier est raccordé à une ligne d'échappement munie d'un filtre à particules. Ce filtre doit être régénéré périodiquement afin d'éliminer les particules de suie qui s'y accumulent. La régénération est réalisée par chauffage de l'air d'admission jusqu'à une température suffisante pour provoquer la combustion des particules de suie.

Par ailleurs, dans certains types de moteur, une partie des gaz d'échappement est remise en circulation avec l'air d'admission. Ces gaz d'échappement sont communément appelés gaz d'échappement recirculés EGR (Exhaust Gaz Recycling). Ces derniers, mélangés avec l'air d'admission à l'aide de moyens appropriés, sont renvoyés vers le moteur.

On souhaite réguler la température des gaz d'échappement recirculés dans le but notamment d'abaisser la température de ces gaz avant d'être mélangés à l'air d'admission et renvoyés vers le moteur.

On connaît déjà dans l'état de la technique un dispositif de régulation thermique de l'air d'admission d'un moteur à combustion interne de véhicule automobile, formant un premier fluide à calo-réguler, et de gaz d'échappement recirculés émis par le moteur, formant un second fluide à calo-réguler, du type comprenant :
- des premiers moyens d'échange thermique entre un liquide caloporteur et l'air d'admission, et
- des seconds moyens d'échange thermique entre un liquide caloporteur et les gaz d'échappement recirculés, voir par exemple le document EP 1 170 498 A1.

Habituellement, le refroidissement de l'air d'admission est réalisé par un échangeur thermique air/air d'admission, placé dans une face avant du véhicule.

Par ailleurs, le réchauffage de l'air d'admission est réalisé par un échangeur thermique liquide caloporteur/air d'admission, placé dans la face avant du véhicule. Cet échangeur liquide caloporteur/air d'admission fait donc partie des premiers moyens d'échange thermique entre un liquide caloporteur et l'air d'admission, identifiés ci-dessus.

Enfin, le refroidissement des gaz d'échappement recirculés est réalisé par un échangeur thermique liquide caloporteur/gaz d'échappement recirculés, jouxtant le moteur. Cet échangeur liquide caloporteur/gaz d'échappement recirculés fait donc partie des seconds moyens d'échange thermique entre un liquide caloporteur et les gaz d'échappement recirculés, identifiés ci-dessus.

La régulation thermique de l'air d'admission et des gaz d'échappement recirculés est donc réalisée à l'aide de trois échangeurs et de multiples moyens de contrôle des débits des fluides calo-régulés associés à ces échangeurs.

Le nombre d'échangeurs et leurs localisations diverses (face avant, zone contiguë au moteur) confère au dispositif de régulation thermique une relative complexité notamment en imposant une ligne d'air d'admission relativement longue conduisant à des pertes de charges conséquentes.

De plus, les moyens de régulation des débits des fluides calo-régulés n'autorisent généralement la circulation de l'air d'admission qu'à travers l'un ou l'autre des deux échangeurs thermiques air/air d'admission et liquide caloporteur/air d'admission en empêchant une influence simultanée de ces deux échangeurs sur l'air d'admission.

DE 197 35 306 décrit un ensemble de régulation thermique de l'air d'alimentation d'un moteur Diesel. Cet ensemble comprend une unité de turbocompression d'air d'alimentation et une unité de gaz d'échappement recirculés. Ces deux unités sont traversées par un canal de liquide caloporteur (eau de refroidissement) et un canal de gaz d'échappement.

L'invention a notamment pour but d'optimiser la structure et le fonctionnement d'un dispositif de régulation thermique du type précité.

A cet effet, l'invention a pour objet un dispositif de régulation thermique de l'air d'admission d'un moteur à combustion interne de véhicule automobile, formant un premier fluide à calo-réguler, et de gaz d'échappement recirculés émis par le moteur, formant un second fluide à calo-réguler, du type précité, **caractérisé en ce qu'il** comprend un échangeur thermique principal muni :
- de première et seconde parties formant respectivement les premiers et seconds moyens d'échange thermique, et
- de moyens de canalisation de liquide caloporteur pour échange thermique avec au moins un des deux fluides à calo-réguler comportant au moins un canal de circulation de liquide caloporteur, commun aux deux parties, en échange thermique avec l'air d'admission et les gaz d'échappement recirculés, ce canal commun faisant différents allers et retours entre les première et seconde parties de l'échangeur principal.

L'invention permet donc de simplifier la structure du dispositif de régulation thermique du fait notamment que l'échangeur thermique principal regroupe les premiers moyens d'échange thermique entre le liquide caloporteur et l'air d'admission et les seconds moyens d'échange thermique entre le liquide caloporteur et les gaz d'échappement recirculés. Cette simplification, qui se traduit par un abaissement du coût du dispositif de régulation thermique, facilite l'intégration de ce dispositif de régulation dans le véhicule. L'échangeur principal pourra avantageusement être agencé à l'entrée du collecteur d'admission du moteur.

Grâce à l'invention, la ligne d'air d'admission est relativement courte si bien que les pertes de charge sont faibles. La conduite du véhicule est plus agréable du fait d'une optimisation des performances du moteur se traduisant par des reprises efficaces.

La simplification de la structure du dispositif de régulation thermique simplifie d'autant les moyens de régulation des débits de fluides calo-régulateur et calo-régulés. De ce fait, les émissions polluantes des moteurs, notamment de type Diesel, (HC, CO, NOx, particules, etc.) sont réduites par l'optimisation de la composition, du débit et de la température du mélange d'admission comprenant l'air d'admission et les gaz recirculés.

De préférence, les moyens de canalisation de liquide caloporteur sont raccordés à un circuit de liquide caloporteur dit froid et a un circuit de liquide caloporteur dit chaud.

Ainsi, l'échangeur principal permet aussi bien de refroidir que de réchauffer l'air d'admission par circulation du liquide caloporteur dans l'échangeur principal à une température appropriée.

Suivant d'autres caractéristiques optionnelles de ce dispositif :
- les flux d'air d'admission et de gaz d'échappement recirculés sont sensiblement parallèles dans les première et seconde parties de l'échangeur thermique ;
- les moyens de canalisation de liquide caloporteur comprennent au moins un canal de circulation de liquide caloporteur, dit canal séparé, s'étendant uniquement dans la première partie, en échange thermique avec l'air d'admission ;
- la première partie de l'échangeur thermique principal est raccordée à un circuit d'air d'admission comprenant des moyens de répartition d'air d'admission, disposés en amont de l'échangeur principal, destinés à répartir l'air d'admission entre des première et seconde zones de la première partie de l'échangeur principal dans lesquelles s'étendent respectivement les canaux commun et séparé de liquide caloporteur ;
- le liquide caloporteur est mis en circulation dans le circuit froid par une pompe ;
- un échangeur thermique liquide caloporteur/air, dit échangeur froid, est raccordé au circuit de liquide caloporteur froid ;
- le circuit chaud est raccordé uniquement au canal commun de circulation de liquide caloporteur ;
- le circuit chaud est raccordé à un échangeur liquide caloporteur/air, dit échangeur chaud, faisant partie de préférence d'un circuit de liquide de refroidissement du moteur à combustion interne ;
- les moyens de canalisation de liquide caloporteur sont raccordés aux circuits froid et chaud à l'aide d'une vanne de répartition à trois voies comprenant une première voie raccordée à la sortie du canal commun, une deuxième voie raccordée à l'entrée de l'échangeur froid et une troisième voie raccordée à l'entrée de l'échangeur chaud ;
- la seconde partie de l'échangeur principal est raccordée à un circuit de gaz d'échappement recirculés comportant des moyens de dérivation de cette seconde partie de l'échangeur principal ;
- le circuit de gaz d'échappement recirculés comporte des moyens de répartition de ces gaz entre la seconde partie de l'échangeur principal et les moyens de dérivation de celle-ci ;
- les moyens de répartition des gaz d'échappement recirculés comprennent une vanne de répartition à trois voies comportant une première voie raccordée à un collecteur d'échappement, une deuxième voie raccordée à l'entrée de la seconde partie de l'échangeur principal et une troisième voie raccordée aux moyens de dérivation de la seconde partie de l'échangeur principal ;
- l'échangeur thermique principal comprend de moyens de canalisation d'un fluide caloporteur dit très froid pour échange thermique avec au moins l'un des fluide à calo-réguler parmi l'air d'admission et les gaz d'échappement recirculés ;
- les moyens de canalisation du fluide très froid sont raccordés à un circuit de fluide dit très froid couplé thermiquement à une pompe à chaleur ;
- l'air d'admission est entraîné, à une pression supérieure à la pression atmosphérique, à travers l'échangeur thermique principal par un ensemble turbo-compresseur muni d'une turbine entraînée par les gaz d'échappement du moteur à combustion interne ;
- le moteur à combustion interne, par exemple de type Diesel, est raccordé à un circuit d'échappement muni d'un filtre à particules ;
- le liquide caloporteur est un mélange d'eau et d'antigel.

L'invention sera mieux comprise à la lecture de la description qui va suivre, donnée uniquement à titre d'exemple et faite en se référant aux dessins dans lesquels :
- les figures 1 à 6 sont des vues schématiques d'un moteur à combustion interne raccordé à des moyens amont formant circuit d'admission d'air, munis d'un dispositif de régulation thermique selon un premier mode de réalisation de l'invention, et à des moyens aval formant ligne d'échappement ;
- la figure 7 est une vue analogue à la figure 1 montrant un dispositif de régulation thermique selon un second mode de réalisation de l'invention.

On a représenté sur les figures un moteur à combustion interne 10 de véhicule automobile, par exemple de type Diesel, raccordé à des moyens amont formant un circuit 12 d'admission d'air dans le moteur 10 et à des moyens aval formant un circuit d'échappement 14.

Le moteur 10 est suralimenté au moyen d'un ensemble turbo-compresseur muni, d'une part, d'une turbine 16 entraînée par des gaz d'échappement du moteur 10, agencée en aval du moteur 10 dans le circuit d'échappement 14, et d'autre part, d'un compresseur 18 d'air d'admission agencé en amont du moteur 10 dans le circuit 12 d'admission d'air. La turbine 16 et le compresseur 18 sont couplés en rotation entre eux de façon connue en soi.

Le circuit d'échappement 14 est muni d'un filtre à particules classique 20.

Le circuit d'admission 12 est raccordé au moteur 10 par un collecteur d'admission 22 formant l'extrémité aval de ce circuit 12.

En amont du compresseur 18, le circuit d'admission comporte un filtre à air classique 23.

Le circuit d'échappement 14 est raccordé au moteur 10 par un collecteur d'échappement 24 formant l'extrémité amont de ce circuit 14.

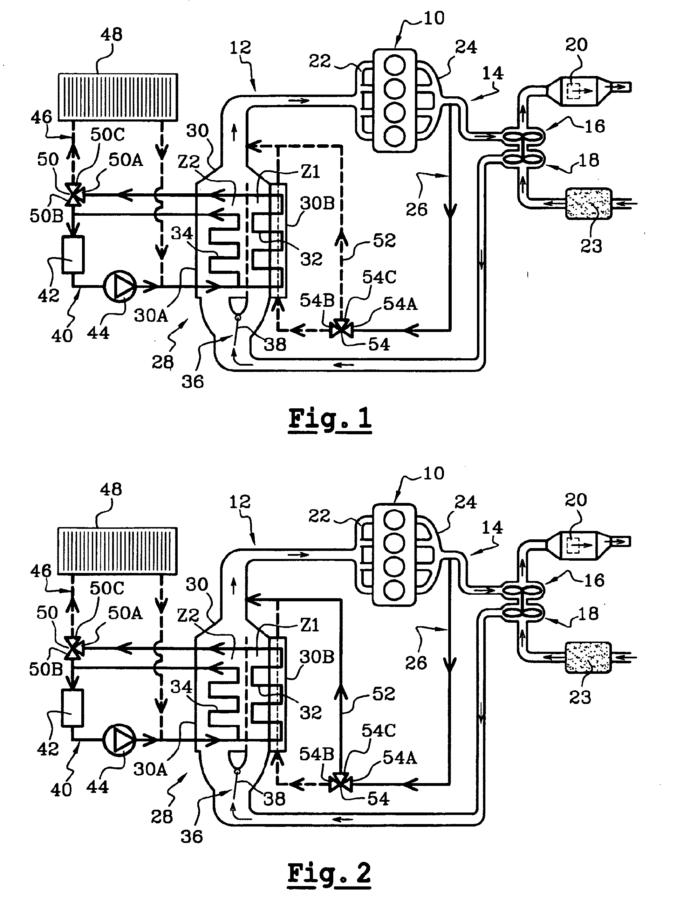

On a également représenté sur la figure 1 un circuit 26 de gaz d'échappement recirculés comportant une extrémité amont raccordée à la sortie du collecteur d'échappement 24 et une extrémité aval raccordée à l'entrée du collecteur d'admission 22.

Les températures de l'air d'admission et des gaz d'échappement recirculés sont régulées au moyen d'un dispositif 28 de régulation thermique selon l'invention dont deux modes de réalisation sont représentés sur les figures 1 à 6, d'une part, et 7, d'autre part. On notera que sur ces figures les éléments analogues sont désignés par des références identiques.

Dans ce qui suit, deux organes sont dits couplés thermiquement entre eux lorsqu'ils échangent de la chaleur entre eux au moyen d'un échangeur thermique approprié.

On se référera ci-dessous au dispositif de régulation thermique 28 selon le premier mode de réalisation de l'invention illustré sur les figures 1 à 6.

Le dispositif de régulation thermique 28 comprend un échangeur thermique principal 30 liquide caloporteur/fluides à calo-réguler.

De préférence, le liquide caloporteur est un mélange d'eau et d'antigel.

L'échangeur thermique principal 30 comprend une première partie 30A formant des premiers moyens d'échange thermique entre le liquide caloporteur et l'air d'admission (premier fluide à calo-réguler). L'échangeur thermique principal 30 comprend également une seconde partie 30B formant des seconds moyens d'échange thermique entre le liquide caloporteur et les gaz d'échappement recirculés (second fluide à calo-réguler).

Les première 30A et seconde 30B parties de l'échangeur principal 30 sont raccordées respectivement aux circuits d'air d'admission 12 et de gaz recirculés 26.

Dans l'échangeur principal 30, les deux flux d'air d'admission et de gaz d'échappement recirculés sont donc séparés. Le mélange éventuel de l'air d'admission avec les gaz d'échappement recirculés se fait, en aval de l'échangeur principal 28, au niveau de l'extrémité aval du circuit 26 raccordée à l'entrée du collecteur d'admission 22.

L'échangeur thermique principal 30 comprend encore des moyens de canalisation du liquide caloporteur pour échange thermique avec l'air d'admission et/ou les gaz d'échappement recirculés.

Ces moyens de canalisation comportent au moins un canal 32 de circulation de liquide caloporteur, commun aux deux parties 30A, 30B. Le liquide caloporteur circulant dans le canal commun 32 et donc susceptible d'être en échange thermique à la fois avec l'air d'admission et les gaz d'échappement recirculés. Plus précisément, les échanges thermiques du liquide caloporteur, circulant d'amont en aval dans le canal commun 32 qui fait différents allers et retours entre les première 30A et seconde 30B parties de l'échangeur principal 30, se font à la fois avec l'air d'admission et avec les gaz d'échappement recirculés.

Les moyens de canalisation de liquide caloporteur comprennent également au moins un canal 34 de circulation de liquide caloporteur, dit canal séparé, s'étendant uniquement dans la première partie 30A de l'échangeur principal 30. Le liquide caloporteur circulant dans le canal séparé 34 n'est donc susceptible d'être en échange thermique qu'avec l'air d'admission.

On notera, que, de préférence, les flux d'air d'admission et de gaz d'échappement recirculés circulent dans les deux parties correspondantes 30A, 30B de l'échangeur principal 30 de façon sensiblement parallèle.

De façon à optimiser la régulation thermique des fluides à calo-réguler traversant l'échangeur principal 30, le circuit d'admission 12 comprend des moyens 36 de répartition de l'air d'admission agencés en amont de l'échangeur principal 30 par rapport au sens de circulation de l'air d'admission. Ces moyens de répartition 36, comportant par exemple un volet articulé 38, sont destinés à répartir l'air d'admission entre des première Z1 et seconde Z2 zones de la première partie 30A de l'échangeur principal 30.

Le canal commun 32 de liquide caloporteur s'étend essentiellement dans la première zone Z1. Le canal séparé 34 de liquide caloporteur s'étend essentiellement dans la seconde zone Z2. Le cas échéant, les deux zones Z1, Z2 peuvent être délimitées par des moyens matériels de séparation.

Les moyens de canalisation de liquide caloporteur, comprenant les canaux commun 32 et séparé 34, sont raccordés à un circuit de liquide caloporteur dit circuit froid 40. Ce circuit froid 40 est distinct du circuit de liquide de refroidissement du moteur 10

Un échangeur thermique classique liquide caloporteur/air, dit échangeur froid 42, est raccordé au circuit froid 40. Cet échangeur froid 42 est agencé, par exemple, dans une face avant du véhicule.

Le liquide caloporteur est mis en circulation dans le circuit froid 40 par une pompe 44 disposée, par exemple, en aval de l'échangeur froid 42.

On notera que les canaux commun 32 et séparé 34 sont raccordés en parallèle au circuit froid 40.

Les moyens de canalisation de liquide caloporteur sont également raccordés, au moins en partie, à un circuit de liquide caloporteur dit circuit chaud 46.

Ainsi, le circuit chaud 46 est raccordé uniquement au canal commun 32 de circulation de liquide caloporteur.

Le circuit chaud 46 est raccordé à un échangeur classique liquide caloporteur/air dit échangeur chaud 48, faisant partie d'un circuit de liquide de refroidissement du moteur 10.

Les moyens de canalisation de liquide caloporteur sont raccordés au circuit froid 40 et chaud 46 à l'aide d'une vanne 50 de répartition à trois voies. Cette vanne de répartition 50 comprend une première voie 50A raccordée à la sortie du canal commun 32, une deuxième voie 50B raccordée à l'entrée de l'échangeur froid 42 et une troisième voie 50C raccordée à l'entrée de l'échangeur chaud 48.

On notera que l'échangeur chaud 48 est muni d'une sortie raccordée à une entrée commune des canaux commun 32 et séparé 34 disposés, dans le cas de l'exemple, en aval de l'échangeur froid 42 et de la pompe 44.

Le circuit 26 de gaz d'échappement recirculés comporte des moyens 52 de dérivation de la seconde partie 30B de l'échangeur principal.

Le circuit 26 de gaz d'échappement recirculés comprend également une vanne 54 à trois voies formant des moyens de répartition des gaz recirculés entre la seconde partie 30B de l'échangeur principal et les moyens 52 de dérivation de celle-ci.

La vanne de répartition 54 comporte une première vanne 54A raccordée au collecteur d'échappement 24, une deuxième voie 54B raccordée à l'entrée de la seconde partie 30B de l'échangeur principal et une troisième voie 54C raccordée aux moyens 52 de dérivation de cette seconde partie 30B.

On décrira ci-dessous quelques exemples de configurations de fonctionnement du dispositif de régulation thermique 28 en se référant aux figures 1 à 6. Sur ces figures, les branches de circuits désactivées sont représentées en traits interrompus.

L'air d'admission est entraîné à travers l'échangeur principal 30, à une pression supérieure à la pression atmosphérique, par l'ensemble turbo-compresseur.

Sur les figures 1 à 3, on a représenté le dispositif de régulation thermique 28 dans une configuration adaptée pour refroidir l'air d'admission.

La configuration du dispositif de régulation 28 illustrée sur la figure 1 est plus particulièrement adaptée au roulage du véhicule à grande vitesse. Dans ce cas, la vanne de répartition 54 est réglée de façon à interdire le renvoi de gaz d'échappement dans le circuit d'admission. Il n'y a donc de circulation de gaz d'échappement recirculés ni dans la seconde partie 30B de l'échangeur principal ni dans les moyens de dérivation 52.

Les moyens 36 de répartition d'air d'admission sont réglés de façon à mettre en contact les canaux commun 32 et séparé 34 de liquide caloporteur avec des flux d'air d'admission maximum traversant les zones Z1 et Z2 de la première partie 30A de l'échangeur principal. La pompe 44 du circuit froid 40 est activée de façon à permettre la circulation de liquide caloporteur dans les canaux commun 32 et séparé 34. La vanne 50 de répartition de liquide caloporteur est réglée de façon à interdire la circulation de liquide caloporteur provenant du circuit chaud 46 dans l'échangeur principal 30.

Dans le cas de la figure 2, la vanne 54 de répartition des gaz d'échappement recirculés est réglée de façon à autoriser le passage de ces gaz uniquement dans les moyens de dérivation 52. Les gaz d'échappement recirculés, ne traversant pas la seconde partie 30B de l'échangeur principal, ne sont pas refroidis.

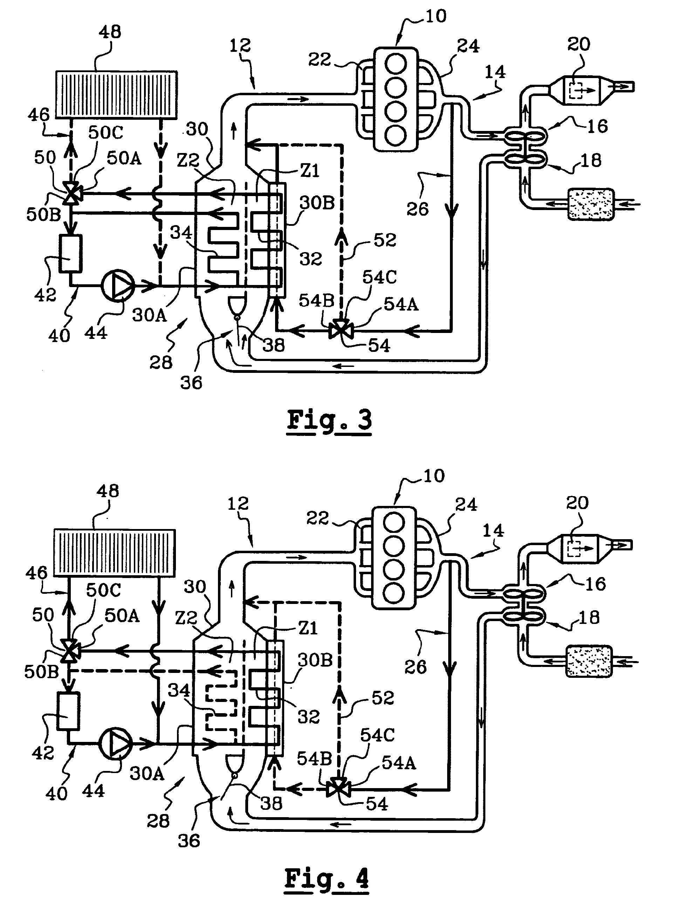

La configuration du dispositif de régulation 28 illustrée sur la figure 3 est plus particulièrement adaptée au roulage du véhicule en ville. Dans ce cas, la vanne 54 de répartition des gaz recirculés est réglée de façon à n'autoriser le passage de ces gaz que dans la seconde partie 30B de l'échangeur principal. La totalité des gaz d'échappement recirculés est donc refroidie par passage dans l'échangeur principal 30.

Les figures 4 à 6 illustrent le dispositif de régulation thermique 28 dans une configuration adaptée pour réchauffer l'air d'admission, notamment dans un but de régénération du filtre à particules 20.

Dans le cas de la figure 4, la pompe 44 du circuit froid 40 est désactivée. La vanne 50 de répartition de liquide caloporteur est réglée de façon à autoriser la circulation de liquide caloporteur dans le circuit chaud 46 et dans le canal commun 32. La circulation du liquide caloporteur à travers l'échangeur froid 42 et le canal séparé 34 est interdite.

Le fait que le circuit chaud 46 ne soit raccordé qu'à une partie des moyens de canalisation de liquide caloporteur dans l'échangeur principal 30, à savoir que dans le canal commun 32, permet de réduire le temps de réponse du dispositif de régulation 28 lorsque l'on souhaite revenir à une configuration de fonctionnement adaptée au refroidissement de l'air d'admission. De plus, on notera que le canal commun 32 est suffisant pour assurer la puissance de chauffage habituellement requise.

Les moyens 36 de répartition d'air d'admission sont réglés de façon à diriger la majorité du flux d'air d'admission dans la première zone Z1 de la première partie 30A de l'échangeur principal dans laquelle s'étend le canal commun 32 raccordé au circuit chaud 46.

La vanne 54 de répartition des gaz d'échappement recirculés est réglée dans une configuration analogue à celle représentée sur la figure 1.

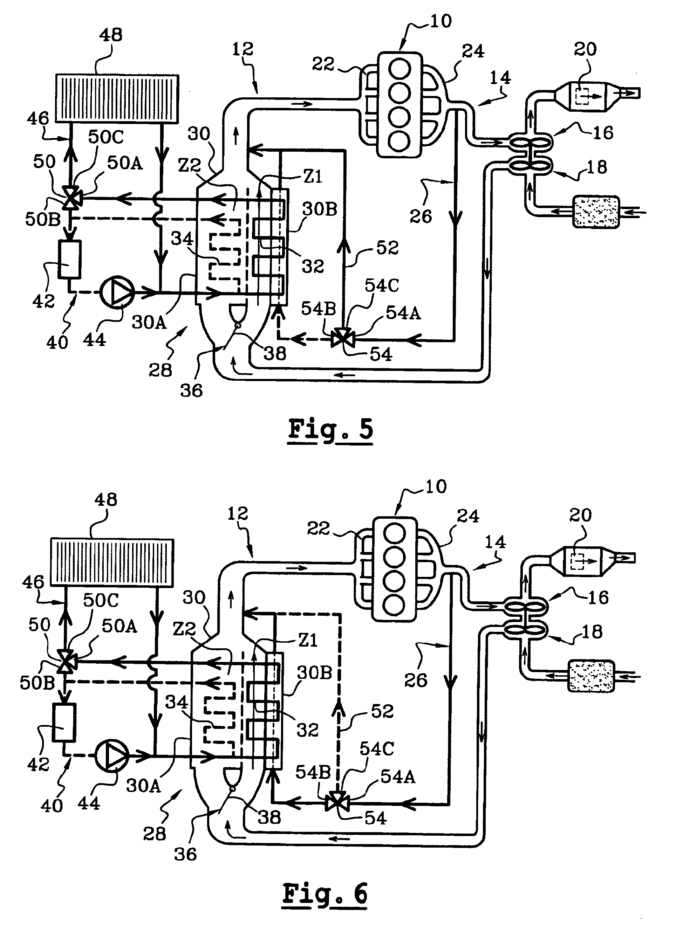

Dans le cas de la figure 5, là vanne 54 de répartition des gaz d'échappement recirculés est réglée dans une configuration analogue à celle représentée sur la figure 2.

Dans le cas de la figure 6, la vanne 54 de gaz d'échappement recirculés est réglée dans une configuration analogue à celle représentée sur la figure 3.

Les gaz d'échappement recirculés traversant la seconde partie 30B de l'échangeur principal sont refroidis par échange thermique avec le liquide caloporteur du circuit chaud 46, la température de ce liquide caloporteur étant inférieure à la température élevée des gaz d'échappement recirculés.

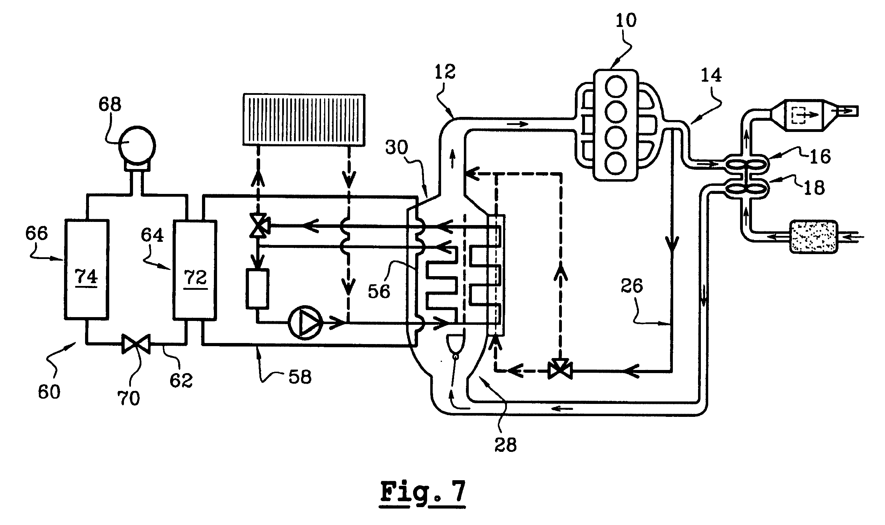

Sur la figure 7, on a représenté un dispositif de régulation thermique 28 selon un second mode de réalisation de l'invention.

Dans ce cas, l'échangeur thermique principal 30 comprend des moyens 56 de canalisation d'un fluide caloporteur dit très froid pour échange thermique avec au moins l'un des fluide à calo-réguler parmi l'air d'admission et les gaz d'échappement recirculés.

Les moyens de canalisation de fluide très froid sont raccordés à un circuit 58 de fluide dit très froid couplés thermiquement à une pompe à chaleur 60 de type classique.

La pompe à chaleur 60 comporte un circuit 62 de fluide frigorigène, de type à compression, prélevant des calories d'une source froide 64 pour les transférer au moins partiellement vers une source chaude 66.

Les sources froide 64 et chaude 66 sont raccordées entre elles par un compresseur 68 et une vanne de détente 70.

La source froide 64 comporte un échangeur thermique 72 fluide frigorigène/liquide caloporteur très froid, dit évaporateur.

La source chaude comprend un échangeur thermique 74 fluide frigorigène/air, dit condenseur.

Le circuit 58 de fluide très froid permet, le cas échéant, d'accélérer le refroidissement de l'air d'admission traversant l'échangeur principal 30.

Bien entendu, le dispositif de régulation thermique 28 peut être réglé dans des configurations intermédiaires autres que celles décrites en se référant notamment aux figures 1 à 6.

Les moyens 36 de répartition d'air d'admission, la vanne 50 de répartition de liquide caloporteur et la vanne 54 de répartition de gaz recirculés peuvent être réglés dans des positions variées autorisant une régulation précise et efficace de la température du mélange d'admission comprenant l'air d'admission et les gaz d'échappement recirculés.

L'invention ne se limite pas aux modes de réalisation décrits ci-dessus.

En particulier le circuit 12 d'air d'admission pourrait être équipé de résistances électriques participant au chauffage de l'air d'admission ou remplaçant le circuit chaud.

En effet, en saison très froide, l'ensemble turbo-compresseur étant à l'arrêt, la température de l'air d'admission arrivant dans l'échangeur principal est relativement faible. Les résistances électriques permettent de chauffer cet air d'admission s'il est nécessaire de régénérer le filtre à particules alors que la température du liquide circulant dans le circuit chaud est faible (ce qui est le cas notamment en phase de démarrage du moteur à combustion interne).

## Revendications

1. Dispositif de régulation thermique de l'air d'admission d'un moteur à combustion interne de véhicule automobile, formant un premier fluide à calo-réguler, et de gaz d'échappement recirculés émis par le moteur (10), formant un second fluide à calo-réguler, du type comprenant :
- des premiers moyens (30A) d'échange thermique entre un liquide caloporteur et l'air d'admission, et
- des seconds moyens (30B) d'échange thermique entre un liquide caloporteur et les gaz d'échappement recirculés,
**caractérisé en ce qu'**il comprend un échangeur thermique principal (30) muni :
- de première (30A) et seconde (30B) parties formant respectivement les premiers et seconds moyens d'échange thermique, et
- de moyens (32, 34) de canalisation de liquide caloporteur pour échange thermique avec au moins un des deux fluides à calo-réguler comportant au moins un canal (32) de circulation de liquide caloporteur, commun aux deux parties, en échange thermique avec l'air d'admission et les gaz d'échappement recirculés, ce canal commun (32) faisant différents allers et retours entre les première (30A) et seconde (30B) parties de l'échangeur principal (30).

2. Dispositif selon la revendication 1, **caractérisé en ce que** les flux d'air d'admission et de gaz d'échappement recirculés sont sensiblement parallèles dans les première (30A) et seconde (30B) parties de l'échangeur thermique.

3. Dispositif selon la revendication 1 ou 2, **caractérisé en ce que** les moyens de canalisation de liquide caloporteur comprennent au moins un canal de circulation de liquide caloporteur, dit canal séparé (34), s'étendant uniquement dans la première partie (30A), en échange thermique avec l'air d'admission.

4. Dispositif selon la revendication 3, **caractérisé en ce que** la première partie (30A) de l'échangeur thermique principal est raccordée à un circuit d'air d'admission (12) comprenant des moyens (36) de répartition d'air d'admission, disposés en amont de l'échangeur principal (30), destinés à répartir l'air d'admission entre des première (Z1) et seconde (Z2) zones de la première partie (30A) de l'échangeur principal dans lesquelles s'étendent respectivement les canaux commun (32) et séparé (34) de liquide caloporteur.

5. Dispositif selon l'une quelconque des revendications précédentes, **caractérisé en ce que** les moyens (32, 34) de canalisation de liquide caloporteur sont raccordés à un circuit (40) de liquide caloporteur dit froid.

6. Dispositif selon la revendication 5, **caractérisé en ce que** le liquide caloporteur est mis en circulation dans le circuit froid (40) par une pompe (44).

7. Dispositif selon la revendication 5 ou 6, **caractérisé en ce qu'**un échangeur thermique liquide caloporteur/air, dit échangeur froid (42), est raccordé au circuit de liquide caloporteur froid (40).

8. Dispositif selon l'une quelconque des revendications précédentes, **caractérisé en ce que** les moyens (32) de canalisation de liquide caloporteur sont raccordés, au moins en partie, à un circuit (46) de liquide caloporteur dit chaud.

9. Dispositif selon la revendication 8, **caractérisé en ce que** le circuit chaud (46) est raccordé uniquement au canal commun (32) de circulation de liquide caloporteur.

10. Dispositif selon la revendication 8 ou 9, **caractérisé en ce que** le circuit chaud (46) est raccordé à un échangeur liquide caloporteur/air, dit échangeur chaud (48), faisant partie de préférence d'un circuit de liquide de refroidissement du moteur à combustion interne.

11. Dispositif selon les revendications 7 et 10 prises ensemble, **caractérisé en ce que** les moyens (32, 34) de canalisation de liquide caloporteur sont raccordés aux circuits froid et chaud à l'aide d'une vanne de répartition (50) à trois voies comprenant une première voie (50A) raccordée à la sortie du canal commun (32), une deuxième voie (30B) raccordée à l'entrée de l'échangeur froid (42) et une troisième voie (30C) raccordée à l'entrée de l'échangeur chaud (48).

12. Dispositif selon l'une quelconque des revendications précédentes, **caractérisé en ce que** la seconde partie (30B) de l'échangeur principal est raccordée à un circuit (26) de gaz d'échappement recirculés comportant des moyens (52) de dérivation de cette seconde partie (30B) de l'échangeur principal.

13. Dispositif selon la revendication 12, **caractérisé en ce que** le circuit (26) de gaz d'échappement recirculés comporte des moyens (54) de répartition de ces gaz entre la seconde partie (30B) de l'échangeur principal et les moyens (52) de dérivation de celle-ci.

14. Dispositif selon la revendication 13, **caractérisé en ce que** les moyens de répartition des gaz d'échappement recirculés comprennent une vanne de répartition (54) à trois voies comportant une première voie (54A) raccordée à un collecteur d'échappement (24), une deuxième voie (54B) raccordée à l'entrée de la seconde partie (30B) de l'échangeur principal et une troisième voie (54C) raccordée aux moyens (52) de dérivation de la seconde partie (30B) de l'échangeur principal.

15. Dispositif selon l'une quelconque des revendications précédentes, **caractérisé en ce que** l'échangeur thermique (30) principal comprend des moyens (56) de canalisation d'un fluide caloporteur dit très froid pour échange thermique avec au moins l'un des fluide à calo-réguler parmi l'air d'admission et les gaz d'échappement recirculés.

16. Dispositif selon la revendication 15, **caractérisé en ce que** les moyens (56) de canalisation du fluide très froid sont raccordés à un circuit (58) de fluide dit très froid couplé thermiquement à une pompe à chaleur (60).

17. Dispositif selon l'une quelconque des revendications précédentes, **caractérisé en ce que** l'air d'admission est entraîné, à une pression supérieure à la pression atmosphérique, à travers l'échangeur thermique principal (30) par un ensemble turbo-compresseur muni d'une turbine (16) entraînée par les gaz d'échappement du moteur à combustion interne.

18. Dispositif selon l'une quelconque des revendications précédentes, **caractérisé en ce que** le moteur à combustion interne (10), par exemple de type Diesel, est raccordé à un circuit d'échappement (14) muni d'un filtre à particules (20).

19. Dispositif selon l'une quelconque des revendications précédentes, **caractérisé en ce que** le liquide caloporteur est un mélange d'eau et d'antigel.

## Claims

1. A device for the thermal regulation of the intake air for an internal combustion engine of a motor vehicle, forming a first heat regulating fluid, and recirculated exhaust gas emitted by the engine (10), forming a second heat-regulating fluid, of the type comprising:
- first heat exchange means (30A) between a heat transfer liquid and the intake air, and
- second heat exchange means (30B) between a heat transfer liquid and the recirculated exhaust gases,
**characterized in that** it comprises a principal heat exchanger (30) provided with:
- first (30A) and second (30B) parts forming the first and second heat exchange means, respectively, and
- means (32, 34) for channeling the heat transfer liquid in order to exchange heat with at least one of two heat regulating fluids comprising at least one channel (32) for circulation of the heat transfer liquid, shared by both parts, exchanging heat with the intake air and the recirculated exhaust gases, this shared channel (32) making different outward and return trips between the first (30A) and second (30B) parts of the principal heat exchanger (30).

2. The device according to claim 1, **characterized in that** the flows of intake air and recirculated exhaust gases are substantially parallel in the first (30A) and second (30B) parts of the heat exchanger.

3. The device according to claim 1 or 2, **characterized in that** the means for channeling the heat transfer liquid comprise at least one channel for circulating the heat transfer liquid, called the separate channel (34), extending only in the first part (30A), exchanging heat with the intake air.

4. The device according to claim 3, **characterized in that** the first part (30A) of the principal heat exchanger is connected to an intake air circuit (12) comprising means (36) for distributing intake air, arranged upstream of the principal heat exchanger (30), designed to distribute the intake air between the first (Z1) and second (Z2) zones of the first part (30A) of the principal heat exchanger wherein extend the shared channels (32) and the separate channel (34) of the heat transfer liquid, respectively.

5. The device according to any of the preceding claims, **characterized in that** the means (32, 34) for channeling the heat transfer liquid are connected to a so-called cold circuit (40) of heat transfer liquid.

6. The device according to claim 5, **characterized in that** the heat transfer liquid is made to circulate in the cold circuit (40) by a pump (44).

7. The device according to claim 5 or 6, **characterized in that** a heat transfer liquid/air exchanger, called cold exchanger (42), is connected to the cold heat transfer liquid circuit (40).

8. The device according to one of the preceding claims, **characterized in that** the means (32) for channeling the heat transfer liquid are connected, at least in part, to a so-called hot circuit (46) of heat transfer liquid.

9. The device according to claim 8, **characterized in that** the hot circuit (46) is connected only to the shared channel (32) for circulating the heat transfer liquid.

10. The device according to claim 8 or 9, **characterized in that** the hot circuit (46) is connected to a heat transfer liquid/air exchanger, called hot exchanger (48), which is preferably part of a circuit of coolant liquid for the internal combustion engine.

11. The device according to claims 7 and 10 taken together, **characterized in that** the means (32, 34) for channeling the heat transfer liquid are connected to the cold and hot circuits with the help of a three-way valve (50) comprising a first path (50A) connected to the outlet of the shared channel (32), a second path (30B) connected to the inlet of the cold exchanger (42) and a third path (30C) connected to the inlet of the hot exchanger (48) .

12. The device according to any of the preceding claims, **characterized in that** the second part (30B) of the principal heat exchanger is connected to a circuit (26) of recirculated exhaust gas comprising means (52) for diverting this second part (30B) from the principal heat exchanger.

13. The device according to claim 12, **characterized in that** the recirculated exhaust gas circuit (26) comprises means (54) for distributing these gases between the second part (30B) of the principal heat exchanger and the means (52) for diverting said second part.

14. The device according to claim 13, **characterized in that** the means for distributing the recirculated exhaust gases comprise a three-way valve (54) comprising a first path (54A) connected to an exhaust manifold (24), a second path (54B) connected to the inlet of the second part (30B) of the principal heat exchanger and a third path (54C) connected to the means (52) for diverting the second part (30B) from the principal heat exchanger.

15. The device according to any of the preceding claims, **characterized in that** the principal heat exchanger (30) comprises means (56) for channeling a so-called very cold heat exchange fluid in order to exchange heat with at least one of the heat-regulating fluids among the intake air and the recirculated exhaust gases.

16. The device according to claim 15, **characterized in that** the means (56) for channeling the very cold fluid are connected to a so-called very cold circuit (58) of fluid thermally coupled to a heat pump (60).

17. The device according to any of the preceding claims, **characterized in that** the intake air is driven, at a pressure greater than the atmospheric pressure, through the principal heat exchanger (30) by a turbo-compressor assembly provided with a turbine (16) driven by the exhaust gases of the internal combustion engine.

18. The device according to any of the preceding claims, **characterized in that** the internal combustion engine (10), for example Diesel, is connected to an exhaust circuit (14) provided with a particle filter (20).

19. The device according to any of the preceding claims, **characterized in that** the heat transfer liquid is a mixture of water and antifreeze.

## Patentansprüche

1. Vorrichtung zur thermischen Regelung der Ansaugluft eines Verbrennungsmotors von Kraftfahrzeugen, ein erstes wärmezuregelndes Fluid bildend, und der vom Motor (10) ausgestoßenen rückgeführten Abgase, ein zweites wärmezuregelndes Fluid bildend, einer Bauart, die umfasst:
- erste Mittel (30A) zum thermischen Austausch zwischen einer Wärmeträgerflüssigkeit und der Ansaugluft, und
- zweite Mittel (30B) zum thermischen Austausch zwischen einer Wärmeträgerflüssigkeit und den rückgeführten Abgasen,
**dadurch gekennzeichnet, dass** sie einen Hauptwärmetauscher (30) umfasst, der ausgestattet ist mit:
- ersten (30A) und zweiten (30B) Abschnitten, die jeweils die ersten und zweiten Wärmetauschmittel bilden, und
- Mitteln (32, 34) zur Kanalisierung von Wärmeträgerflüssigkeit zum thermischen Austausch mit mindestens einem der zwei wärmezuregelnden Fluids, die mindestens einen Zirkulationskanal (32) für die Wärmeträgerflüssigkeit aufweisen, der beiden Abschnitten gemeinsam ist, in thermischem Austausch mit der Ansaugluft und den rückgeführten Abgasen, wobei dieser gemeinsame Kanal (32) verschiedene Hin- und Rückwege zwischen dem ersten (30A) und zweiten (30B) Abschnitt des Hauptwärmetauschers (30) bildet.

2. Vorrichtung nach Anspruch 1, **dadurch gekennzeichnet, dass** die Ansaugluft- und rückgeführten Abgasströme im ersten (30A) und zweiten (30B) Abschnitt des Wärmetauschers etwa parallel sind.

3. Vorrichtung nach Anspruch 1 oder 2, **dadurch gekennzeichnet, dass** die Kanalisationsmittel der Wärmeträgerflüssigkeit mindestens einen separater Kanal (34) genannten Zirkulationskanal für die Wärmeträgerflüssigkeit umfassen, der sich nur im ersten Abschnitt (30A) erstreckt, in thermischem Austausch mit der Ansaugluft.

4. Vorrichtung nach Anspruch 3, **dadurch gekennzeichnet, dass** der erste Abschnitt (30A) des Hauptwärmetauschers an einen Aussaugluftkreislauf (12) angeschlossen ist, der Mittel (36) zur Verteilung der Ansaugluft umfasst, die vor dem Hauptwärmetauscher (30) angeordnet sind und dazu bestimmt, die Ansaugluft zwischen ersten (Z1) und zweiten (Z2) Bereichen des ersten Abschnitts (30A) des Hauptwärmetauschers zu verteilen, in denen sich jeweils der gemeinsame (32) und separate (34) Kanal der Wärmeträgerflüssigkeit erstrecken.

5. Vorrichtung nach einem der vorangehenden Ansprüche, **dadurch gekennzeichnet, dass** die Kanalisationsmittel (32, 34) für die Wärmeträgerflüssigkeit an einen kalt genannten Wärmeträgerflüssigkeitskreislauf (40) angeschlossen sind.

6. Vorrichtung nach Anspruch 5, **dadurch gekennzeichnet, dass** die Wärmeträgerflüssigkeit im kalten Kreislauf (40) von einer Pumpe (44) in Umlauf gebracht wird.

7. Vorrichtung nach Anspruch 5 oder 6, **dadurch gekennzeichnet, dass** ein kalter Wärmetauscher (42) genannter Wärmetauscher Wärmeträgerflüssigkeit/Luft an den kalten Wärmeträgerflüssigkeitskreislauf (40) angeschlossen ist.

8. Vorrichtung nach einem der vorangehenden Ansprüche, **dadurch gekennzeichnet, dass** die Kanalisationsmittel (32) für die Wärmeträgerflüssigkeit zumindest teilweise an einen warm genannten Wärmeträgerflüssigkeitskreislauf (46) angeschlossen sind.

9. Vorrichtung nach Anspruch 8, **dadurch gekennzeichnet, dass** der warme Kreislauf (46) nur an den gemeinsamen Zirkulationskanal (32) der Wärmeträgerflüssigkeit angeschlossen ist.

10. Vorrichtung nach Anspruch 8 oder 9, **dadurch gekennzeichnet, dass** der warme Kreislauf (46) an einen warmer Wärmetauscher (48) genannten Wärmetauscher Wärmeträgerflüssigkeit/Luft angeschlossen ist, der vorzugsweise Bestandteil eines Kühlflüssigkeitskreislaufs des Verbrennungsmotors ist.

11. Vorrichtung nach den gemeinsam herangezogenen Ansprüchen 7 und 10, **dadurch gekennzeichnet, dass** die Kanalisierungsmittel (32, 34) für die Wärmeträgerflüssigkeit an den kalten und warmen Kreislauf mit Hilfe eines Dreiwege-Verteilerventils (50) angeschlossen sind, das einen ersten Weg (50A) umfasst, der an den Ausgang des gemeinsamen Kanals (32) angeschlossen ist, einen zweiten Weg (30B), der an den Eingang des kalten Wärmetauschers (42) angeschlossen ist und einen dritten Weg (30C), der an den Eingang des warmen Wärmetauschers (48) angeschlossen ist.

12. Vorrichtung nach einem der vorangehenden Ansprüche, **dadurch gekennzeichnet, dass** der zweite Abschnitt (30B) des Hauptwärmetauschers an einen Kreislauf (26) für die rückgeführten Abgase angeschlossen ist, der Mittel (52) zur Umgehung dieses zweiten Abschnitts (30B) des Hauptwärmetauschers umfasst.

13. Vorrichtung nach Anspruch 12, **dadurch gekennzeichnet, dass** der Kreislauf (26) für rückgeführte Abgase Mittel (54) zur Verteilung dieser Gase zwischen dem zweiten Abschnitt (30B) des Hauptwärmetauschers und den Mitteln (52) zur Umgehung desselben umfasst.

14. Vorrichtung nach Anspruch 13, **dadurch gekennzeichnet, dass** die Mittel zur Verteilung der rückgeführten Abgase ein Dreiwege-Verteilerventil (54) umfassen, das einen ersten Weg (54A) aufweist, der an eine Abgassammelleitung (24) angeschlossen ist, einen zweiten Weg (54B), der an den Eingang des zweiten Abschnitts (30B) des Hauptwärmetauschers angeschlossen ist und einen dritten Weg (54C), der an Mittel (52) zur Umgehung des zweiten Abschnitts (30B) des Hauptwärmetauschers angeschossen ist.

15. Vorrichtung nach einem der vorangehenden Ansprüche, **dadurch gekennzeichnet, dass** der Hauptwärmetauscher (30) Mittel (56) zur Kanalisierung einer als sehr kalt bezeichneten Wärmeträgerflüssigkeit zum thermischen Austausch mit mindestens einem der wärmezuregelnden Fluids Ansaugluft und rückgeführte Abgase umfasst.

16. Vorrichtung nach Anspruch 15, **dadurch gekennzeichnet, dass** die Kanalisationsmittel (56) des sehr kalten Fluids an einen sehr kalt genannten Fluidkreislauf (58) angeschlossen sind, der thermisch mit einer Wärmepumpe (60) gekoppelt ist.

17. Vorrichtung nach einem der vorangehenden Ansprüche, **dadurch gekennzeichnet, dass** die Ansaugluft mit einem Druck über dem atmosphärischen Druck von einer Turbolader-Baugruppe, die mit einer Turbine (16) ausgestattet ist, die von den Abgasen des Verbrennungsmotors angetrieben wird, durch den Hauptwärmetauscher (30) geleitet wird.

18. Vorrichtung nach einem der vorangehenden Ansprüche, **dadurch gekennzeichnet, dass** der beispielsweise der Dieselbauart entsprechende Verbrennungsmotor (10) an einen mit einem Partikelfilter (20) ausgestatteten Abgaskreislauf (14) angeschlossen ist.

19. Vorrichtung nach einem der vorangehenden Ansprüche, **dadurch gekennzeichnet, dass** die Wärmeträgerflüssigkeit ein Gemisch aus Wasser und Frostschutz ist.
